# EUROPEAN PATENT APPLICATION

(11) **EP 4 398 149 A1**
(43) Date of publication of application: **10.07.2024**
(21) Application number: 23305020.2
(22) Date of filing: 09.01.2023
(51) Int. Cl.: G06K 19/07, G06Q 20/22, G06Q 20/34, G07F 7/08, G07F 7/10, G06F 3/044, H03K 17/955, H03K 17/96

(54) **SMARTCARD FOR CONTACTLESS TRANSACTIONS**

(71) Applicant: THALES DIS FRANCE SAS, 92190 Meudon (FR)
(72) Inventor: CAPOMAGGIO, Grégory, 13360 ROQUEVAIRE (FR); BUTON, Christophe, 13420 GEMENOS (FR)
(74) Representative: Quintero Romero, Manuel

(57) **Abstract**

The present invention provides a smartcard configured to perform at least contactless transactions when powered by a terminal radiofrequency field, wherein the smartcard comprises:
at least one touch sensor which activation is based on charge transfer, each of the at least one touch sensor comprising an electrode adapted to change its capacitance upon being touched by a human body part,
a touch-sensing controller configured to measure the capacitance value of each of the at least one electrode and compared them with a reference value,
wherein one of the at least one touch sensor is considered as being touched when the measured capacitance value is higher than the reference value.

## Description

### TECHNICAL FIELD

The present invention relates to smartcards configured to perform contactless transactions. More particularly, it concerns contactless-enabled smartcards that are able to offer selectable options to the end user during a contactless transaction.

### BACKGROUND OF THE INVENTION

In today's smartcard industry, it is possible to find contact and/or contactless-enabled smartcards that can perform contact(-less) transactions with standalone terminals. The communication protocol between them is typically standardized by ISO 7816 protocol (for contact transactions) and ISO 14443 protocol (for contactless transactions).

It is also known that, when performing a contact transaction with a smartcard, it is possible for the end user to select between different options such as payment schemes (e.g. Debit or Credit), by cooperating with the terminal (e.g. Point-Of-Sale, POS, terminal). To this end, for instance, when addressing payment transactions, after inserting the smartcard in the POS terminal slot, the end user (e.g. cardholder) can select the appropriate payment scheme on the screen of the terminal which is displaying the available options, then the transaction will go on with the particulars of the option chosen.

Given the user-centric, ergonomic and frictionless nature of contactless transactions, organisms decided to skip any manual selection on terminal screens to keep a fast and fluid tap on the contactless terminal. Thus, for contactless payment transactions with cards supporting more than one payment scheme, banks made the Debit payment scheme the option by default. Since Debit selection triggers a local payment scheme (such as *Carte Bancaire,* CB, in France), no VISA or Mastercard fees are applicable on contactless transactions. This pre-selection principle aims at avoiding increasing significantly the cost of the smartcard.

Since smartcard manufacturing is a mass production industry, there is a need in the smartcard field for a reliable, cost-effective and terminal touch-free contactless smartcard also able to support different transaction options.

### SUMMARY OF THE INVENTION

In order to provide the same selection capability on contactless-enabled smartcards, the present invention proposes a smartcard architecture comprising switch(es) integrated over or embedded into the card body. During a contactless transaction, the end user will swipe or tap the card over the terminal which will power the smartcard by the generated radiofrequency field. The end user will be touching/pressing the appropriate switch to select the type of transaction he/she wants to trigger. The touch or press of a specific switch will have associated the triggering of a different transaction type so that the terminal touch-free function during the contactless transaction is preserved.

As per today, two main switch technologies exist which are compliant with the imposed constraints on smartcard body thickness:
- "Mechanical switches" which reliability is proven to decrease over time. Furthermore, smartcards embedding such mechanical switches are usually more expensive and complex to manufacture (e.g., during assembly) thus influencing the product price.
- "Touch sensors" based on capacitance changes when human body parts (such as fingers) touch or approach its sensor electrode (printed or wired conductive plane). Advantageously, touch sensors do not suffer from deterioration over time since the electrode (which is mechanical stress-less) is typically protected by the smartcard body. Furthermore, the electrode technology itself is cheaper as it can be directly designed on the copper / aluminum layer of the antenna inlay. Thus, touch sensors are a cost-effective technology compliant with standard lamination process and hence can be used for smartcard mass production.

Touch sensor technology is based on charge transfer principle. Briefly, when the contactless-enabled smartcard enters into the radiofrequency field generated by the terminal, it charges the electrode sensor (with a given capacitance) and the accumulated charge is transferred into a sampling capacitor (Cs). This sequence is repeated until the voltage across Cs reaches a threshold value (V_{IH}). The number of charge transfers required to reach the threshold value is a direct representation of the size of the electrode capacitance. Thus, when the electrode sensor is touched or approached by a human body part, its capacitance to the earth is hereby increased and, hence, the Cs voltage reaches V_{IH} with a lesser number of charge transfers.

Before detecting the presence of a human body part nearby the electrode sensor, touch sensors require first a calibration to identify the capacitance value in an untouched state. This untouched state is assumed by default as the starting situation. Then, a threshold value is established as a percentage of the calibration value to detect whether the touch sensor has been activated or not. Practically speaking, the increase of this electrode impedance as a result of a touch is measured by a reduction in the number of charge transfers needed for the sampling capacitor (Cs) to achieve V_{IH}.

Throughout this entire document, the terms "increase in the electrode capacitance" will be considered as equivalent of "decrease in the number of charge transfer".

Nevertheless, this configuration brings many drawbacks during daily usage. As mentioned, the touch-sensing controller assumes by default that the touch sensor is in an untouched state at start-up to perform the calibration, but in real-like contexts users sometimes already presses the touch sensors when approaching the smartcard to the terminal thus resulting in a malfunctioning. In this exemplifying case, the reference value measured during the calibration stage corresponds to an already touch state rendering the potential touch undetected.

The present invention provides a solution for all the aforementioned problems by a smartcard according to claim 1, a method to perform a contactless transactions according to claim 9, and a method to personalize a smartcard according to claim 15. In dependent claims, preferred embodiments of the invention are defined.

In a first inventive aspect, the invention provides a smartcard configured to perform at least contactless transactions when powered by a terminal radiofrequency field. The smartcard comprises:
- at least one touch sensor which activation is based on charge transfer, each of the at least one touch sensor comprising an electrode adapted to change its capacitance upon being touched by a human body part,
- a touch-sensing controller configured to measure the capacitance value of each of the at least one electrode and compared them with a reference value,
wherein one of the at least one touch sensor is considered as being touched when the measured capacitance value is higher than the reference value.

Unlike prior art solutions where the touch-sensing controller performs on the same touch sensor the calibration upon initiation and later on the measurement on the value variation, the present invention provides a solution where the reference value or calibration value for a given touch sensor will come from outside. That is, the reference value will be retrieved from another element of the smartcard other than the touch sensor that will be applied to.

Again, the touch-sensing controller can measure the capacitance value of a sensor electrode either directly or indirectly by counting the number of charge transfers needed for the sampling capacitor (Cs) to achieve V_{IH}. Thus, increasing the capacitance value equals to decreasing the number of charge transfers and the touch sensor can be considered as being touched when the measured number of charge transfers is lower than the equivalent reference value.

In a particular embodiment, the detection of a touched state on a touch sensor triggers the execution of a specific application by a secure element of the smartcard. In a preferred embodiment, the secure element of the smartcard supports different payment schemes.

Therefore, it is understood that if one touch sensor is touched during or after entering the smartcard into the terminal radiofrequency field, the secure element will execute the associated application.

Thus, in case the smartcard comprises one single touch sensor, the transition of the touch sensor from an untouched state towards a touched state can execute a first application; while the remaining in the untouched state (for a certain pre-established time) can execute a second application. That is, this second application can be set as the by-default application. As an example, the first application can trigger a Credit payment scheme while the second application can trigger a Debit payment scheme. To assist the end user in this operation, the touch sensor may have a logo, text or drawing placed nearby to the type of application that triggers.

In a particular embodiment, the reference value for comparison with a measured value is pre-defined and stored in a memory of the smartcard. In a preferred embodiment, the reference value is set by measuring on personalization stage the capacitance of one electrode in untouched state.

Therefore, the electrode capacitance in untouched state (also known as "free air" state) is measured in production, preferably, during the card personalization stage in the factory. This value is considered as the reference value and is stored in a smartcard memory. Preferably, this value is stored in a Non-Volatile Memory (NVM) of the touch-sensing controller (or even in the secure controller itself) and is rendered accessible by the touch-sensing controller for comparison on the fly with the value measured during the contactless transaction.

Alternatively, instead of the raw reference value, the % threshold needed to consider an activation may be computed and saved for direct application thereof.

As it is easily derivable from the foregoing, this mechanism could be applied to smartcards embedding a single or multiple touch sensors.

In a particular embodiment, the smartcard comprises at least two touch sensors with electrodes having substantially similar capacitance when in untouched state, the touch-sensing controller being configured to measure the capacitance values of each electrode when the smartcard is being powered by the terminal radiofrequency field and to compare them for detecting the one in a touched state. In such case, the touch-sensing controller proceeds to measure the capacitance of each electrode sequentially, i.e., one at a time, and in very short time.

Thus, if the user is already pressing or touching one of the touch sensors, the touch-sensing controller will receive a different capacitance value from each of them. That is, the capacitance value of the touched touch sensor will be higher than the remaining touch sensors (which will be assumed in an untouched state). Similarly, the number of charge transfers counted for the touch sensor with the touched electrode will be lower than the remaining. If this difference is sufficiently big (by meeting the specified criteria e.g., surpassing a given %), the touch-sensing controller will consider that the touch sensor with highest capacitance (or lowest number of charge transfers) has been touched and, hence, will trigger the associated transaction application.

That is, in a particular embodiment, the detection of a touched state on each touch sensor triggers the execution of a different transaction application by the secure element of the smartcard.

Otherwise, if one measurement is higher than the remaining but still within the % threshold defined, the touch-sensing controller will consider that no touch sensor was actually touched and transaction will be aborted.

In a different embodiment, even if no touch sensor is considered as touched because none of the measurements surpasses the % to be declared as touched, the smartcard may trigger a "by-default application" different from any of the displayed ones associated with different touch sensors.

In a preferred embodiment, a touch sensor is considered as being touched when its measured capacitance value is a value (or a smaller sub-range) between 20 - 40% higher than the reference value, preferably at least 30% higher than the reference value. In similar way, the number of charge transfers can be between 20 - 40% lower than the reference value, preferably at least 30% lower than the reference value.

As mentioned, in case of multiple touch sensors present on the smartcard, the touch sensor with highest measured capacitance will be considered as touched when its measurement be between 20 - 40% higher than the second-ranked measurement, preferably at least 30% higher than the second-ranked measurement.

In an alternative embodiment, still in the scenario with multiple touch sensors present on the smartcard, the touch sensor with highest measured capacitance will be considered as touched when its measurement be between 20 - 40% higher than the average measurement of the remaining touch sensors, prefeably equal to (or higher than) 30% higher than the average measurement of the remaining touch sensors.

In a second inventive aspect, the invention provides a method to perform a contactless transaction using a smartcard according to any of the embodiments of the first inventive aspect, wherein the method comprises the following steps:
- approaching the smartcard into a terminal radiofrequency field to power it;
- measuring, by the touch-sensing controller, the capacitance value of each of the at least one electrode;
- comparing, by the touch-sensing controller, the at least one measured capacitance value with the reference value; and
- if the measured capacitance value of a touch sensor is higher than the reference value, then detecting a touched state on such touch sensor.

In a particular embodiment, upon detection of the touched state by the touch sensor, a specific application is executed by the secure element of the smartcard.

In a particular embodiment, the smartcard comprises at least two touch sensors with electrodes having substantially similar capacitance when in untouched state, the method comprising the following step:
- measuring, by the touch-sensing controller, the capacitance values of each electrode;
- comparing, by the touch-sensing controller, the measured capacitance values among them and identifying the highest capacitance value; and
- assigning, by the touch-sensing controller, the touch sensor with highest capacitance value as in a touched state.

In a particular embodiment, the highest capacitance value is assigned when greater than another measured capacitance value by between 20 - 40%, preferably by more than or equal to 30%.

In a particular embodiment, the detection of a touched state on each touch sensor triggers the execution of a different transaction application by the secure element of the smartcard.

In a particular embodiment, the method further comprises:
- accessing by the touch-sensing controller to a pre-defined reference value stored in a memory of the smartcard.

In a third inventive aspect, the invention provides a method to personalize a smartcard, wherein the method comprises:
- providing to the smartcard at least one touch sensor which activation is based on charge transfer, each of the at least one touch sensor comprising an electrode adapted to change its capacitance upon being touched by a human body part,
- measuring the capacitance value of at least one of the electrodes in an untouched state;
- establishing the reference value as the measured untouched state capacitance value; and
- storing the reference value in a memory of the smartcard accessible by the touch-sensing controller.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1a: This figure depicts a charge-transfer equivalent hardware of a touch sensor.
- Figure 1b: This figure depicts the oscillogram measurement of the voltage across Cx over a full charge cycle with a detailed view of the first 5 charge transfers.
- Figure 2: This figure shows a schematic representation of the number of charge transfers during calibration vs. when a human body part is detected nearby the electrode.
- Figure 3: This figure shows a schematic representation of a comparison between the option selection in prior art contact-based transactions vs. contactless transactions according to the present invention.
- Figure 4: This figure shows a schematic representation of the measurements from an untouched touch sensor and a touched one when performing a contactless transaction with multiple touch sensors according to the invention.
- Figure 5: This figure shows a schematic representation of the measurements from an untouched touch sensor and a touched one when performing a contactless transaction with a single touch sensor operable by the end user according to the invention.

### DETAILED DESCRIPTION OF THE INVENTION

As it will be appreciated by one skilled in the art, aspects of the present invention may be embodied as a smartcard or a method to perform a contactless transactions.

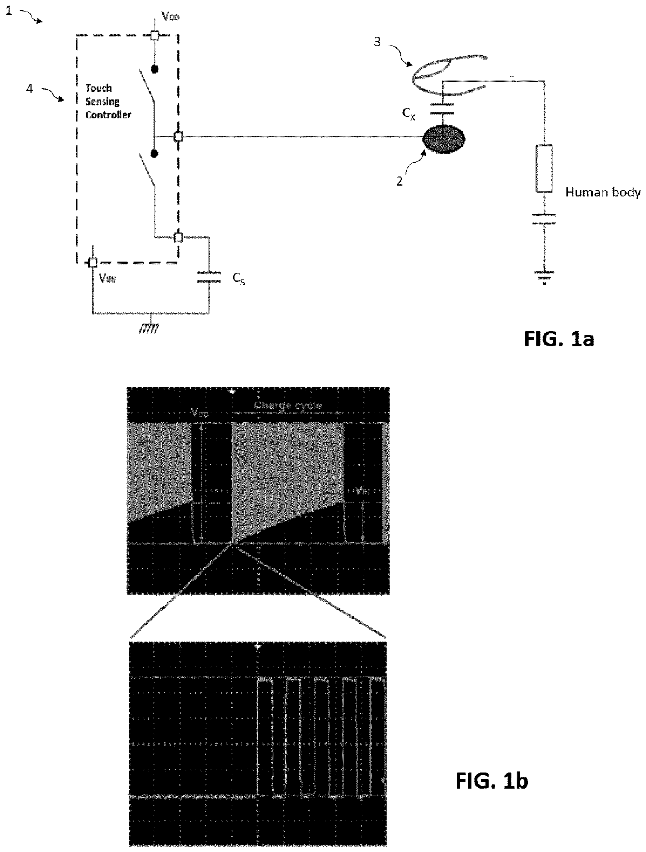

**Figure 1a** depicts a charge-transfer equivalent hardware of a touch sensor 1. As known, capacitance exists between any reference point relative to ground as long as they are electrically isolated. In the electrode sensor 2 depicted, the positive terminal is the sensing electrode itself while the negative terminal is formed by the surrounding area (e.g. virtual ground reference). The electrode sensor 2 can be made of any electrically conductive material, such as copper or transparent conductive material like Indium Tin Oxide (ITO) deposited, printed or wired directly on the copper / aluminum layer of the antenna inlay.

When a conductive object such as a human body part 3 (e.g., a human finger in Fig. 1) is brought into proximity of the electrode sensor, the coupling between the human body and the electrode increases, together with the capacitance of the electrode sensor 2 relative to ground. As known, the human body part 3 touches the protective dielectric panel (not shown) on the electrode sensor 2 hereby increasing its capacitance significantly.

For touch sensors, the goal is to measure the capacitance changes of the sensor electrode 2 when the human body part 3 touches or approaches its surface and to monitor whether this change surpasses a given threshold. This changes are measured by the touch-sensing controller 4.

The touch sensing technology is based on charge transfer. The principle of charge transfer acquisition consists in charging the capacitance of the electrode sensor 2 (equivalent capacitance Cx) and in transferring sequentially the accumulated charge into a sampling capacitor Cs. Cx is fully charged with a stable reference voltage V_{DD} and Cs capacitance is typically from 1000 to 100,000 times bigger than Cx. The function of the Cs capacitor is to collect the charge from the electrode sensor. It also influences the sensitivity of the system. A bigger Cs capacitor will ensure that the Cx capacitance is computed with a higher resolution. This increases the sensitivity of the touch sensor.

The charge transfer process is repeated until the voltage on Cs reaches a threshold (e.g., 30% of V_{DD}). This threshold is referred to as V_{IH}. The number of transfer cycles required to reach the threshold represents the size of Cx. When the electrode sensor is touched, its capacitance to the earth Cx is increased and Cs voltage reaches V_{IH} with lesser charge transfers. Although it can be correlated with the capacitance change, the number of charge transfers is the typical value measured. When this measurement surpasses a given threshold (i.e., below it), a detection is reported by the touch-sensing controller.

In the example of figure 1, it is considered that capacitance of the electrode sensor Cₓ~ 10pF; CX ~ 22-200nF; and RS ~ 10kOhm.

Top side of **figure 1b** shows an oscillogram measurement with the voltage across Cx over a full charge cycle, while the bottom side shows a detailed view of the first 5 charge transfers. The charge cycle refers to process of charging Cs to V_{IH} using a sequence of transfer cycles. The charge cycle duration refers to the time needed to complete one Cs charge cycle.

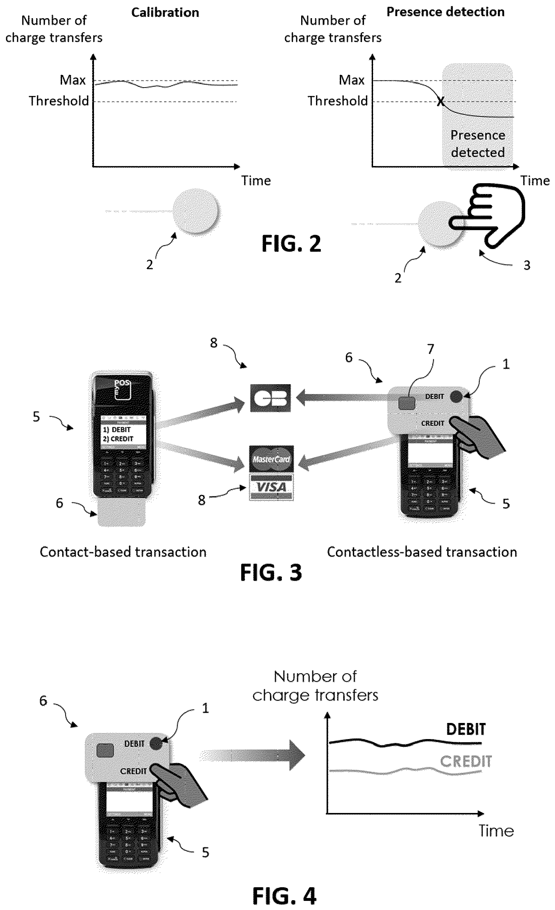

**Figure 2** depicts a schematic representation of the number of charge transfers during calibration (left-hand side) vs. when a human body part 3 is detected nearby the electrode sensor 2 (right-hand side).

As mentioned, when it comes to touch sensors 1, calibration is necessary to determine the max value of the charge transfers, to which the pre-defined % is computed to determine the threshold value whose surpassing will trigger the touch detection. In other words, this threshold value delimits the border between the untouched state (above it) and touched state (on or below it).

Again, the untouched state (i.e., left-hand side situation) is assumed by state-of-art touch sensors as the by default starting or power-up situation. This incurs in drawbacks during daily usage as often users already presses the touch sensors when approaching the smartcard to the terminal thus resulting in a miscomputation of the threshold and hence malfunctioning.

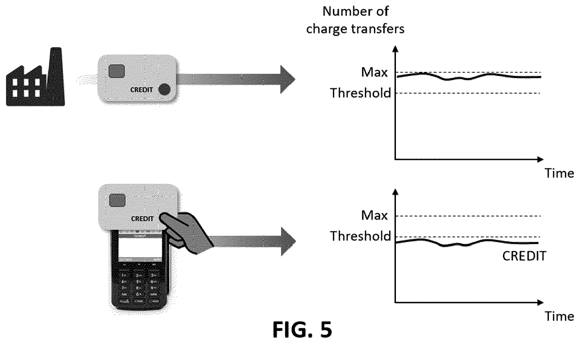

These max and threshold values are also shown in figures 4 and 5 to distinguish the triggering of different transactions types (e.g., payment schemes).

**Figure 3** shows a contact and a contactless situation, respectively: an option selection in prior art contact-based transactions (left-hand side) vs. contactless transactions according to the present invention (right-hand side). On the left-hand side scenario, the terminal 5 is powering-up the smartcard 6 through the chip 7. On the right-hand side one, as known, the contactless smartcard chip 7 communicates with the terminal 5 (so-called card reader) through an induction technology thanks to their antennas (not shown).

The two terminals 5 shown in figure 3 can be the same, as many possess today contact and contactless capabilities. Likewise, the two smartcards 6 can be similar since the contactless smartcard 6 according to the invention may also have contact capabilities.

Advantageously, the smartcard 6 according to the invention is able to offer different transaction types 8 selectable by the user him/herself during use. Namely, instead of selecting the user the desired payment scheme on the terminal screen, these options are selectable directly on card surface thanks to the touch sensors 1 distributed over it.

The locations of the touch sensors 1 should be away enough to avoid inferences. Their number are related to the number of options given to the users. To limit the number of touch sensors, while saving costs, failing to press a touch sensor 1 for a given time (e.g., a few seconds) can trigger the execution of a by-default application such as a Debit payment scheme (depicted as "CB" in figure 3). This by-default application can nonetheless have associated a touch sensor 1 but in absence of further instructions from the user, it can be triggered as a "safety" mode to avoid abortion of the transaction. **Figure 4** shows a schematic representation of the measurements from an untouched touch sensor 1 and a touched one 1 when performing a contactless transaction with multiple touch sensors 1 according to the invention according to this example.

As mentioned, upon power-up, the touch-sensing controller 4 may establish the touch sensor with the highest measurement as the one in the untouched state ("Debit" in figure 4). The touch sensor 1 with lowest measured number of charge transfers will be considered as touched when its measurement be at least e.g., 30% lower than the other touch sensor, than the second-ranked measurement, or the average measurement of the remaining touch sensors.

Likewise, instead of two touch sensors 1 as depicted in figures 3 and 4, only one may be present (see for instance **figure 5****).** In this case, there is a by-default application that is automatically triggered upon powering-up the smartcard 6 unless the touch sensor 1 instructing otherwise is pressed.

Particularly, figure 5 also shows a schematic representation when the untouched state of the contactless smartcard is measured on personalization stage (at the manufacturing site) and saved in a memory (e.g., NVM). This reference value can be saved directly or after computing the threshold to be accessed by the touch-sensing controller in use. Accordingly, if the measurement surpasses the threshold associated with the saved value, a touch will be detected and the associated application executed.

## Claims

1. Smartcard configured to perform at least contactless transactions when powered by a terminal radiofrequency field, wherein the smartcard comprises:
• at least one touch sensor which activation is based on charge transfer, each of the at least one touch sensor comprising an electrode adapted to change its capacitance upon being touched by a human body part,
• a touch-sensing controller configured to measure the capacitance value of each of the at least one electrode and compared them with a reference value,
wherein one of the at least one touch sensor is considered as being touched when the measured capacitance value is higher than the reference value.

2. Smartcard according to claim 1 wherein the detection of a touched state on a touch sensor triggers the execution of a specific application by a secure element of the smartcard.

3. Smartcard according to any of claims 1 or 2, wherein the smartcard comprises at least two touch sensors with electrodes having substantially similar capacitance when in untouched state, the touch-sensing controller being configured to measure the capacitance values of each electrode when the smartcard is being powered by the terminal radiofrequency field and to compare them for detecting the one in a touched state.

4. Smartcard according to claim 3, wherein at least one of the electrodes of a touch sensor is embedded into the smartcard body rendered inaccessible to be touched, so that its capacitance measurement is considered as the reference value.

5. Smartcard according to claims 2 and 3, wherein the detection of a touched state on each touch sensor triggers the execution of a different transaction application by the secure element of the smartcard.

6. Smartcard according to any of claims 1 to 5, wherein a touch sensor is considered as being touched when its measured capacitance value is between 20 - 40% higher than the reference value, preferably at least 30% higher than the reference value.

7. Smartcard according to any of claims 1 to 6, wherein the reference value for comparison with a measured value is pre-defined and stored in a memory of the smartcard.

8. Smartcard according to claim 7, wherein the reference value is set by measuring on personalization stage the capacitance of one electrode in untouched state.

9. Method to perform a contactless transaction using a smartcard according to any of claims 1 to 8, wherein the method comprises the following steps:
• approaching the smartcard into a terminal radiofrequency field to power it;
• measuring, by the touch-sensing controller, the capacitance value of each of the at least one electrode;
• comparing, by the touch-sensing controller, the at least one measured capacitance value with the reference value; and
• if the measured capacitance value of a touch sensor is higher than the reference value, then detecting a touched state on such touch sensor.

10. Method according to claim 9, wherein upon detection of the touched state by the touch sensor, a specific application is executed by the secure element of the smartcard.

11. Method according to any of claims 9 or 10, wherein the smartcard comprises at least two touch sensors with electrodes having substantially similar capacitance when in untouched state, the method comprising the following step:
• measuring, by the touch-sensing controller, the capacitance values of each electrode;
• comparing, by the touch-sensing controller, the measured capacitance values among them and identifying the highest capacitance value; and
• assigning, by the touch-sensing controller, the touch sensor with highest capacitance value as in a touched state.

12. Method according to claim 11, wherein the highest capacitance value is assigned when greater than another measured capacitance value by between 20 - 40%, preferably by 30%.

13. Method according to any of claims 9 to 12 when dependent on claim 10, wherein the detection of a touched state on each touch sensor triggers the execution of a different transaction application by the secure element of the smartcard.

14. Method according to any of claims 9 to 13, wherein the method further comprises:
• accessing by the touch-sensing controller to a pre-defined reference value stored in a memory of the smartcard.

15. Method to personalize a smartcard according to claim 8, wherein the method comprises:
• providing to the smartcard at least one touch sensor which activation is based on charge transfer, each of the at least one touch sensor comprising an electrode adapted to change its capacitance upon being touched by a human body part,
• measuring the capacitance value of at least one of the electrodes in an untouched state;
• establishing the reference value as the measured untouched state capacitance value; and
• storing the reference value in a memory of the smartcard accessible by the touch-sensing controller.
